(19) Europäisches Patentamt
European Patent Office
Office européen des brevets

(11) EP 0 722 988 B1

(12) EUROPÄISCHE PATENTSCHRIFT

(45) Veröffentlichungstag und Bekanntmachung des Hinweises auf die Patenterteilung:
**15.07.1998 Patentblatt 1998/29**

(51) Int Cl.[6]: **C08L 77/06**, C08L 35/06
// (C08L77/06, 35:06),
(C08L35/06, 77:06)

(21) Anmeldenummer: **96100336.5**

(22) Anmeldetag: **11.01.1996**

# (54) Thermoplastische Polyamidformmassen

Thermoplastic polyamide moulding compositions

Masses à mouler thermoplastiques à base de polyamides

(84) Benannte Vertragsstaaten:
**BE CH DE FR GB LI NL**

(30) Priorität: **19.01.1995 DE 19501450**

(43) Veröffentlichungstag der Anmeldung:
**24.07.1996 Patentblatt 1996/30**

(73) Patentinhaber: **BASF AKTIENGESELLSCHAFT**
**67056 Ludwigshafen (DE)**

(72) Erfinder:
- **Gottschalk, Axel, Dr.**
  **D-67435 Neustadt (DE)**
- **Fisch, Herbert, Dr.**
  **D-67157 Wachenheim (DE)**
- **Pipper, Gunter**
  **D-67098 Bad Dürkheim (DE)**
- **Weber, Martin, Dr.**
  **D-67433 Neustadt (DE)**

(56) Entgegenhaltungen:
**EP-A- 0 319 055**
**EP-A- 0 345 486**
**EP-A- 0 667 367**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 722 988 B1

Printed by Jouve, 75001 PARIS (FR)

**Beschreibung**

Die Erfindung betrifft thermoplastische Formmassen, enthaltend

A) 5 bis 95 Gew.-% eines teilkristallinen, teilaromatischen Copolyamids mit einem Kristallinitätsgrad größer 30 % aufgebaut aus

$a_1$) 30 bis 44 mol-%Einheiten, welche sich von Terephthalsäure ableiten

$a_2$) 6 bis 20 mol-%Einheiten, welche sich von Isophthalsäure ableiten

$a_3$) 43 bis 49,5 mol-%Einheiten, welche sich von Hexamethylendiamin ableiten

$a_4$) 0,5 bis 7 mol-%Einheiten, welche sich von aliphatischen cyclischen Diaminen mit 6 bis 30 C-Atomen ableiten

wobei die Molprozente der Komponenten $a_1$) bis $a_4$) zusammen 100 % ergeben und

B) 5 bis 95 Gew.-% eines Copolymeren aus vinylaromatischen Verbindungen, mit $\alpha,\beta$-ungesättigten Dicarbonsäureanhydriden und $\alpha,\beta$-ungesättigten Dicarbonsäureimiden,

C) 0 bis 90 Gew.-% eines SAN-, ABS- oder ASA-Polymeren oder eines Polymeren eines $C_1$- bis $C_{18}$-Alkylesters der (Meth)acrylsäure oder deren Mischungen,

D) 0 bis 20 Gew.-% eines kautschukelastischen Polymerisates

E) 0 bis 50 Gew.-% eines faser- oder teilchenförmigen Füllstoffes

F) 0 bis 30 Gew.-% üblicher Zusatzstoffe und Verarbeitungshilfsmittel,

wobei die Gewichtsprozente der Komponenten A) bis F) zusammen 100 % ergeben.

Weiterhin betrifft die Erfindung die Verwendung dieser Formmassen zur Herstellung von Formkörpern jeglicher Art und die daraus erhältlichen Formkörper.

Polymermischungen, auch Polymerblends genannt, dienen im allgemeinen der Verbindung zweier unterschiedlicher Polymerer mit den jeweils wünschenswerten Eigenschaften der Einzelkomponenten, wobei möglichst die unerwünschten Eigenschaften kompensiert werden sollen. Auf diese Weise können mit neuen Blendzusammensetzungen andere Anwendungsgebiete erschlossen werden.

Polymermischungen aus Polyamiden mit N-substituierten Maleinimid-Copolymeren sind z.B. aus der EP-A 49103, EP-A 319 055, JP-A 62/084 502 und JP-A 58/071952 bekannt. Die bekannten Polymermischungen zeigen verbesserte mechanische Eigenschaften, jedoch bei der Verarbeitung eine hohe Schwindung. Unter Schwindung versteht man die Differenz der Flächen oder Volumina von Formteilen nach erfolgtem Spritzguß und nach Abkühlen des Formteils. Bei einer hohen Schwindung ist der Formkörper nach dem Abkühlen (gegenüber der ursprünglichen Spritzgußform) stark verkleinert, im ungünstigsten Fall ist die Schwindung nicht einheitlich über die gesamte Fläche.

Aufgabe der vorliegenden Erfindung war es daher, thermoplastische Formmassen auf der Basis von Polyamiden und N-substituierten Maleinimid-Copolymeren zur Verfügung zu stellen, die neben guten mechanischen Eigenschaften auch eine möglichst geringe Schwindung bei der Verarbeitung aufweisen.

Demgemäß wurden die eingangs definierten Formmassen gefunden.

Bevorzugte Ausführungsformen sind den Unteransprüchen zu entnehmen.

Als Komponente A) enthalten die erfindungsgemäßen Formmassen ein teilaromatisches teilkristallines Copolyamid mit einem Kristallinitätsgrad größer 30 %, in Mengen von 5 bis 95, vorzugsweise 20 bis 80 und insbesondere 40 bis 80 Gew.-% aufgebaut aus

$a_1$) 30 bis 44, vorzugsweise 32 bis 40 und insbesondere 32 bis 38 mol-% Einheiten, welche sich von Terephthalsäure ableiten,

$a_2$) 6 bis 20, vorzugsweise 10 bis 18 und insbesondere 12 bis 18 mol-% Einheiten, welche sich von Isophthalsäure ableiten,

$a_3$) 43 bis 49,5, vorzugsweise 46 bis 48,5 und insbesondere 46,3 bis 48,2 mol-% Einheiten, welche sich von Hexa-

methylendiamin ableiten,

$a_4$) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,

wobei die Molprozente der Komponenten $a_1$) bis $a_4$) zusammen 100 % ergeben.

Die Diamineinheiten $a_3$) und $a_4$) werden vorzugsweise äquimolar mit den Dicarbonsäureeinheiten $a_1$) und $a_2$) umgesetzt.

Geeignete Monomere $a_4$) sind vorzugsweise cyclische Diamine der Formel

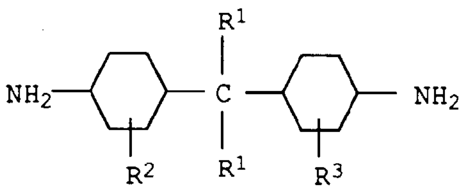

in der

$R^1$ Wasserstoff oder eine $C_1$-$C_4$-Alkylgruppe,
$R^2$ eine $C_1$-$C_4$-Alkylgruppe oder Wasserstoff und
$R^3$ eine $C_1$-$C_4$-Alkylgruppe oder Wasserstoff bedeutet.

Besonders bevorzugte Diamine $a_4$) sind Bis(4-aminocyclohexyl)methan, Bis (4-amino-3-methylcyclohexyl)methan, Bis(4-aminocyclohexyl)-2,2-propan und Bis(4-amino-3-methylcyclohexyl)-2,2-propan.

Als weitere Monomere $a_4$) seien 1,3- und 1,4-Cyclohexandiamin und Isophorondiamin genannt.

Neben den vorstehend beschriebenen Einheiten $a_1$) bis $a_4$) können die teilaromatischen Copolyamide A) bis zu 4, vorzugsweise bis zu 3,5 Gew.-% (bezogen auf 100 Gew.-% A) an weiteren polyamidbildenden Monomeren $a_5$) enthalten, wie sie von anderen Polyamiden bekannt sind.

Aromatische Dicarbonsäuren $a_5$) weisen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphtalindicarbonsäure und Phenoxyterephthalsäure.

Weitere polyamidbildende Monomere $a_5$) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 290°C bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den teilaromatischen Copolyamide sollen erfindungsgemäß solche verstanden werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von $\Delta H_{krist.}$ bestimmt.

Selbstverständlich können auch Mischungen der teilaromatischen Copolyamide umgesetzt werden, wobei das

Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 340°C erhitzt, wobei ein Druck von 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129195 und 129 196 beschriebenen Verfahren.

Gemäß diesen Verfahren wird eine wäßrige Lösung der Monomeren $a_1$) bis $a_4$) sowie gegebenenfalls $a_5$) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponente B) sowie gegebenenfalls C) bis F) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Als Komponente B) enthalten die erfindungsgemäßen Formmassen 5 bis 95, vorzugsweise 5 bis 50 und insbesondere 5 bis 30 Gew.-% eines Copolymeren aus vinylaromatischen Verbindungen mit $\alpha,\beta$-ungesättigten Dicarbonsäureanhydriden und $\alpha,\beta$-ungesättigten Dicarbonsäureimiden.

Die Komponente B) ist vorzugsweise aufgebaut aus:

$b_1$) 10 bis 90, vorzugsweise 20 bis 80 und insbesondere 30 bis 70 Gew.-% einer vinylaromatischen Verbindung,

$b_2$) 1 bis 50, vorzugsweise 1 bis 35 und insbesondere 1 bis 25 Gew.-% eines $\alpha,\beta$-ungesättigten Dicarbonsäureanhydrids,

$b_3$) 9 bis 80, vorzugsweise 19 bis 75 und insbesondere 29 bis 70 Gew.-% eines $\alpha,\beta$-ungesättigten Dicarbonsäureimids,

$b_4$) 0 bis 35, vorzugsweise 0 bis 30 und insbesondere 0 bis 25 Gew.-% sonstigen radikalisch polymerisierbaren Monomeren.

Als Beispiele für vinylaromatische Verbindungen $b_1$) seien Chlorstyrol, o-Methylstyrol, p-Methylstyrol, Dimethylstyrol, m-Ethyl-styrol, Isopropylstyrol, tert.-Butylstyrol, $\alpha$-Methylstyrol, Ethylvinyltoluol genannt, wobei Styrol besonders bevorzugt ist.

Selbstverständlich können auch Mischungen der jeweiligen Monomeren $b_1$) bis $b_4$) eingesetzt werden.

Geeignete Monomere $b_2$) weisen in der Regel 4 bis 20 C-Atome, bevorzugt 4 bis 12 C-Atome auf. Vorzugsweise sind die Monomeren $b_2$) cyclische Anhydride, wobei die Doppelbindung sowohl exocyclisch als auch endocyclisch sein kann.

Bevorzugt sind Maleinsäureanhydrid, Methylmaleinsäureanhydrid und Itaconsäureanhydrid.

Geeignete Dicarbonsäureimide $b_3$) sind Monomere der Formel I

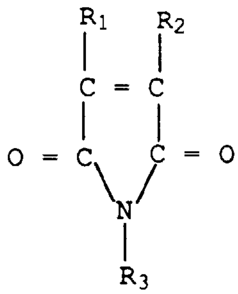

I

wobei $R_1$, $R_2$ und $R_3$ unabhängig voneinander folgende Bedeutung haben:
Wasserstoff, ein gesättigter oder ein- oder mehrfach ungesättigter aliphatischer Rest, wobei diese C-Atome auch durch isolierte O-Atome unterbrochen sein können, ein cycloaliphatischer Rest, ein araliphatischer oder ein aromatischer Rest.

Der Alkylrest kann sowohl linear als auch verzweigt sein und ist vorzugsweise aus 1 bis 20 C-Atomen aufgebaut. Als Beispiele seien Methyl-, Ethyl-, Propyl-, Butyl-, n-Hexyl-, n-Pentyl-, n-Decylund der n-Dodecylrest genannt.

Der Cycloalkylrest kann sowohl unsubstituiert als auch substituiert sein. Beispiele hierfür sind Cyclobutyl-, Cyclopentyl, Cyclohexyl und p-Methylcyclohexyl-Reste. Die Alkylgruppe der Aralkylreste kann sowohl linear als auch verzweigt sein und die Aralkylreste können auch Substituenten (Alkylgruppen oder Halogene) aufweisen. Beispiele für Aralkylreste und aromatische Reste sind Benzyl, Ethylphenyl oder p-Chlorbenzyl. Bevorzugte Reste sind Phenyl, Naphthyl und Cyclohexyl.

Ferner können die Copolymere noch Monomere $b_4$) enthalten, die sich von weiteren radikalisch polymerisierbaren Verbindungen ableiten. Beispielhaft seien hier (Meth)Acrylsäure und (Meth)Acrylsäurederivate und (Meth)Acrylnitril genannt.

Die Copolymeren enthalten die Einheiten $b_1$) bis $b_3$) sowie gegebenenfalls $b_4$) in einer statistischen Verteilung. In der Regel weisen die Copolymeren B) Molekulargewichte ($M_w$) von 30 000 bis 500 000, bevorzugt 50 000 bis 250 000, insbesondere 70 000 bis 200 000 auf.

Die Copolymeren werden üblicherweise durch radikalische Polymerisation hergestellt. Dabei kann die Umsetzung sowohl in Suspension oder Emulsion als auch in Lösung oder Substanz durchgeführt werden, wobei letzteres bevorzugt wird. Derartige Herstellverfahren sind dem Fachmann bekannt, so daß sich weitere Einzelheiten hierzu erübrigen.

Die Copolymere können auch beispielsweise wie in der US 4 404 322 beschrieben dadurch hergestellt werden, daß zunächst die Komponenten $b_1$), $b_2$) sowie gegebenenfalls $b_4$) radikalisch polymerisiert werden und anschließend die im Reaktionsprodukt enthaltenen Anhydridgruppen teilweise mit entsprechenen primären Aminen H2N-R4 oder/ und Ammoniak in Imidgruppen überführt werden. Die Alkylreste $R_4$ der primären Amine entsprechen hierbei dem Rest $R_3$ wie vorstehend für Verbindungen der Formel I ausgeführt.

Die Umsetzung kann im allgemeinen sowohl in Lösung mit Lösungsmitteln wie Benzol oder Toluol durchgeführt werden oder in Substanz, wobei die Schmelze des Copolymeren aus $b_1$) und $b_2$) sowie gegebenenfalls $b_4$) mit Ammoniak und/oder primären Aminen in geeigneten Vorrichtungen (wie Extrudern) umgesetzt wird.

Diese Reaktion wird in der Regel in Gegenwart eines tertiären Amins (z.B. Triethylamin oder N,N-Diethylanilin) als Katalysator bei Temperaturen von 80 bis 350°C ausgeführt. Bei dieser Herstellungsvariante werden vorzugsweise aus 50 bis 75 Gew.-% aromatischer Vinylverbindungen mit 25 bis 50 Mol-% cyclischer $\alpha,\beta$-ungesättigten Dicarbonsäureanhydride der Copolymere radikalisch hergestellt und anschließend mit Ammoniak und/oder primären Aminen behandelt, wobei das molare Verhältnis der Komponenten aus $b_2$): $R_4$-$NH_2$ 1:5 bis 5:1 beträgt.

Als Polymer (C) enthalten die erfindungsgemäßen Formmassen 0 bis 90, vorzugsweise 0 bis 60 und insbesondere 0 bis 40 Gew.-% eines ASA- oder ABS- oder SAN-Polymerisates oder eines Polymeren aus $C_1$ bis $C_{18}$ Alkylestern der (Meth)acrylsäure oder Mischungen derartiger Polymere.

Das Mischungsverhältnis der Polymeren ist über weite Grenzen variierbar; für den Fall der Mischung von (Meth) acrylaten mit ASA, ABS oder SAN ist jedoch zu beachten, daß diese nur bis zu einem Acrylnitrilgehalt bis zu 27 Gew.-

% (bis 250°C bezogen auf die Verarbeitungstemperatur), bis zu 25 Gew.-% (bis 300°C), bezogen auf den Gesamtgehalt an z.B. ABS, mischbar sind.

Bevorzugte ASA-Polymerisate sind aufgebaut aus einer Weich- oder Kautschukphase aus einem Pfropfpolymerisat aus:

$C_1$ 50 bis 90 Gew.-% einer Pfropfgrundlage auf Basis von

- $C_{11}$ 95 bis 99,9 Gew.-% eines $C_2$-$C_{10}$-Alkylacrylats und
- $C_{12}$ 0,1 bis 5 Gew.-% eines difunktionellen Monomeren mit zwei olefinischen, nicht konjugierten Doppelbindungen, und

$C_2$ 10 bis 50 Gew.-% einer Pfropfgrundlage aus

- $C_{21}$ 20 bis 50 Gew.-% Styrol oder substituierten Styrolen der allgemeinen Formel I oder deren Mischungen, und
- $C_{22}$ 10 bis 80 Gew.-% Acrylnitril, Methacrylnitril, Acryl-säureestern oder Methacrylsäureestern oder deren Mischungen,

in Mischung mit einer Hartmatrix auf Basis eines SAN-Copolymeren

$C_3$) aus:

- $C_{31}$ 50 bis 90, vorzugsweise 55 bis 90 und insbesondere 65 bis 85 Gew.-% Styrol und/oder substituierten Styrolen der allgemeinen Formel I und
- $C_{32}$ 10 bis 50, vorzugsweise 10 bis 45 und insbesondere 15 bis 35 Gew.-% Acrylnitril und/oder Methacrylnitril.

Bei der Komponente $C_1$) handelt es sich um ein Elastomeres, welches eine Glasübergangstemperatur von unter -20, insbesondere unter -30°C aufweist.

Für die Herstellung des Elastomeren werden als Hauptmonomere $C_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $C_{11}$ + $C_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $C_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $C_1$ am Pfropfpolymerisat $C_1$+$C_2$ beträgt 50 bis 90, vorzugsweise 55 bis 85 und insbesondere 60 bis 80 Gew.-%, bezogen auf das Gesamtgewicht von $C_1$+$C_2$.

Auf die Pfropfgrundlage $C_1$ ist eine Pfropfhülle $C_2$ aufgepfropft, die durch Copolymerisation von

$C_{21}$ 20 bis 90, vorzugsweise 30 bis 90 und insbesondere 30 bis 80 Gew.-% Styrol oder substituierten Styrolen der allgemeinen Formel I

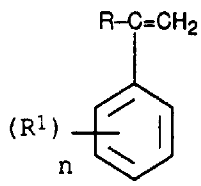

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$C_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $C_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $C_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $C_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $C_1 + C_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $C_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($C_1$+$C_2$) zählen im Rahmen dieser Erfindung auch die bei der Pfropfmischpolymerisation zur Herstellung der Komponente $C_2$) entstehenden freien, nicht gepfropften Homo- und Copolymerisate.

Nachstehend seien einige bevorzugte Pfropfpolymerisate angeführt:

1: 60 Gew.-% Pfropfgrundlage $C_1$ aus

$C_{11}$ 98 Gew.-% n-Butylacrylat und
$C_{12}$ 2 Gew.-% Dihydrodicyclopentadienylacrylat und 40 Gew.-% Pfropfhülle $C_2$ aus
$C_{21}$ 75 Gew.-% Styrol und
$C_{22}$ 25 Gew.-% Acrylnitril

2: Pfropfgrundlage wie bei 1 mit 5 Gew.-% einer ersten Pfropfhülle aus Styrol
und
35 Gew.-% einer zweiten Pfropfstufe aus

$C_{21}$ 75 Gew.-% Styrol und
$C_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $C_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise

liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($C_1$ + $C_2$):$C_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente C) sind vorstehend (siehe $C_{31}$ und $C_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymere (C) in den erfindungsgemäßen weisen den gleichen Aufbau wie vorstehend für ASA-Polymere beschrieben auf. Anstelle des Acrylatkautschukes $C_1$) der Pfropfgrundlage beim ASA-Polymer werden üblicherweise konjugierte Diene, eingesetzt, so daß sich für die Pfropfgrundlage $C_4$ vorzugsweise folgende Zusammensetzung ergibt:

$C_{41}$ 70 bis 100 Gew.-% eines konjugierten Diens und
$C_{42}$ 0 bis 30 Gew.-% eines difunktionellen Monomeren mit zwei olefinischen nicht-konjugierten Doppelbindungen

Als Beispiele für konjugierte diene seien 1,3 Pentadien, alkyl-substituierte Diene wie 2,3-Dimethylbutadien oder konjugierte Hexadiene, Heptadiene sowie Octadiene und cyclische Diene wie Cyclopentadien genannt, wobei Butadien und Isopren bevorzugt sind.

Pfropfauflage $C_2$ und die Hartmatrix des SAN-Copolymeren $C_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($C_4$ + $C_2$):$C_3$ liegt im Bereich von 3:1 bis 1:3, vorzugsweise von 2:1 bis 1:2.

Als Polymer (C) in den erfindungsgemäßen Formmassen kommt weiterhin ein Polymer aus einem $C_1$-$C_{18}$ Alkylester der (Meth)acrylsäure oder deren Mischungen in Betracht.

Als $C_1$-$C_{18}$-Alkylester der Acrylsäure verwendet man erfindungsgemäß die $C_1$-$C_{18}$-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren.

Als $C_1$-$C_{18}$-Alkylester der Methacrylsäure verwendet man erfindungsgemäß die $C_1$-$C_{18}$-Alkylester wie Methyl-, Ethyl-, n-Propyl-, 1-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl-oder Stearylmethacrylat, bevorzugt Methylmethacrylat, sowie Mischungen dieser Monomeren.

Als weitere Comonomere kann man bis zu 50 Gew.-%, bevorzugt von 1 bis 20 Gew.-%, der folgenden beispielhaft aufgeführten Monomeren einsetzen:

- Vinylaromaten wie Styrol, alpha-Methylstyrol, Vinyltoluol oder p-tert.-Butylstyrol;
- p-Aminostyrol;
- - p-Hydroxystyrol;
- p-Vinylbenzoesäure
- Acryl- und Methacrylsäure;
- Acryl- und Methacrylamid;
- Maleinsäure sowie deren Imide und $C_1$-$C_{10}$-Alkylester;
- - Fumarsäure sowie deren Imide und $C_1$-$C_{10}$-Alkylester;
- Itaconsäure sowie deren Imide und $C_1$-$C_{10}$-Alkylester;
- Acryl- und Methacrylnitril;
- Hydroxyalkyl(meth)acrylate.

Als besonders vorteilhaft haben sich Polymerisate aus 99 Gew.-% Methylmethacrylat und 1 Gew.-% Methylacrylat mit einem Molekulargewicht (Gewichtsmittelwert $M_w$) von 60.000 bis 300.000 g/mol, insbesondere von 80.000 bis 150.000 g/mol, erwiesen.

Polymethylmethacrylat stellt man in der Regel nach bekannten Polymerisationsverfahren wie Masse-, Lösungs-, Emulsions- oder Perlpolymerisation her. Solche Verfahren sind beispielsweise in Kunststoffhandbuch, Bd. 9, Vieweg und Esser; Polymethylmethacrylat, Carl-Hanser-Verlag, München, 1975, S. 36ff, beschrieben.

Die erfindungsgemäßen Formmassen können 0 bis 20, vorzugsweise 0 bis 15 und insbesondere 0 bis 10 Gew.-% eines kautschukelastischen Polymerisats, welches verschieden von B) und C) ist, enthalten. Derartige Polymerisate werden oft auch als schlagzähmodifizierende Polymere, Schlagzähmodifier, Elastomere oder Kautschuke bezeichnet.

Die Komponente D) weist im allgemeinen mindestens eine Elastomerphase auf, deren Erweichungstemperatur unter -25, bevorzugt unter -30°C liegt.

Kautschuke, die die Zähigkeit von Polyamiden erhöhen, weisen i.a. zwei wesentliche Merkmale auf: sie enthalten

einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie z.B. Cumolhydroperxoid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US-A 3 651 015, beschrieben. Auch im Handel sind entsprechende Produkte unter den Bezeichnungen Hytrel® (Du Pont), Arnitel® (Akzo) und Pelprene® erhältlich.

Selbstverständlich könne auch Mischungen verschiedener Kautschuke eingesetzt werden.

Als weiteren Bestandteil können die erfindungsgemäßen Formmassen 0 bis 50, vorzugsweise bis 35 Gew.-% eines faser- oder teilchenförmigen Füllstoffes (Komponente (E)) oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew. % Glasfasern mit 15 Gew.% Wollastonit.

Neben den wesentlichen Komponenten A) und B) sowie gegebenenfalls C) und/oder D) und/oder E) können die erfindungsgemäßen Formmassen übliche Zusatzstoffe und Verarbeitungshilfsmittel F) enthalten. Deren Anteil beträgt im allgemeinen bis zu 30, vorzugsweise bis zu 15 Gew.%, bezogen auf das Gesamtgewicht der Komponenten (A) bis (F).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün

oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche $\pi$-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch gute mechanische Eigenschaften in Kombination mit einer guten Schwindung aus. Insbesondere lassen sie sich problemlos thermoplastisch verarbeiten und eignen sich demgemäß zur Herstellung von Fasern, Folien und Formkörpern.

Beispiele

Komponente A)

Eine ca. 60 %ige wäßrige Lösung, bestehend aus Terephthalsäure (32,2 mol-% ≙ 37,5 Gew.-%), Isophthalsäure (17,8 mol-% ≙ 20,6 Gew.-%), Hexamethylendiamin (48,1 mol-% ≙ 39,1 Gew.-% bzw. 1,9 mol-% ≙ 2,8 Gew.-%), Bis (4-aminocyclohexyl)methan und 0,174 kg Propionsäure sowie 100 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine

Viskositätszahl von 48 ml/g (gemessen als 0,5 %ige Lösung bei 25°C in 96 gew.-%iger $H_2SO_4$ gemäß DIN 53 246).

Das Produkt wies in etwa eine Äquivalenz von Carboxyl- und Aminoendgruppen auf.

Im Austragsextruder wurde die Schmelze auf Normaldruck entspannt und bei einer Verweilzeit von weniger als 1 Minute praktisch nicht mehr weiter kondensiert.

Anschließend wurde das Produkt in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 23 h. Im Verlauf dieser Temperung wurde gegebenenfalls auch ein Großteil der extrahierbaren Restmonomere vom Wasserdampf extrahiert.

Zusammensetzung:

$a_1$) 32,2 mol-% bzw. 37,5 Gew.-%
$a_2$) 17,8 mol-% bzw. 20,6 Gew.-%
$a_3$) 48,1 mol-% bzw. 39,1 Gew.-%
$a_4$) 1,9 mol-% bzw. 2,8 Gew.-%

Als relatives Maß für den Kristallinitätsgrad wurde die spezifische Schmelzwärme $\Delta H_{krist.}$ mittels Differential Scanning Colorimetrie (DSC 990 Firma Du Pont) bei 20°C/min Aufheizrate bestimmt: 54 J/g.

Komponente A/1V

| | |
|---|---|
| Poly-ε-Caprolactam | VZ: 150 ml/g |
| | $\Delta H_{krist}$: 75 J/g |

(Ultramid ® B3 der BASF AG)

Komponente B/1

Ein Copolymer aus:

46,1 Gew.-% Styrol
2,3 Gew.-% Maleinsäureanhydrid
51,6 Gew.-% N-Phenyl-Maleimid
$M_w$ = 135 000 (Malecca ® IP MS-NA der Firma Showa Denka)

Komponente B/2

Ein Copolymer aus:

47,5 Gew.-% Styrol
6,2 Gew.-% Maleinsäureanhydrid
46,3 Gew.-% N-Phenyl-Maleimid
$M_w$ = 135 000 (Malecca ® MS-L2A der Firma Showa Denka)

Komponente C/1

Ein ABS-Polymer (Terluran® 967 K der BASF AG) erhältlich gemäß Beispiel 1 der DE-A 24 27 960:
In einem für 10 atü ausgelegten V2A-Stahlkessel mit Blattrührer wurden die folgenden Produkte vorgelegt:

150 Teile Wasser,
1,2 Teile des Natriumsalzes einer Parafinsulfonsäure ($C_{12}$-$C_{18}$),
0,3 Teile Kaliumpersulfat,
0,3 Teile Natriumbicarbonat,
0,15 Teile Natriumpyrophosphat.

Zur Entfernung des Sauerstoffs wurde der Kessel zweimal mit Stickstoff gespült und die Lösung dann in Stickstoff-Atmosphäre auf 65°C erhitzt. Darauf wurden der Lösung 0,5 Teile tert.-Dodecylmercaptan und 16,6 Teile Butadien zugeführt. 1 Stunde nach lymerisationsbeginn wurden weitere 83,3 Teile Butadien innerhalb von 5 Stunden zudosiert.

5 Stunden nach Beendigung der Butadien-Zugabe, d.h. nach insgesamt 11 Stunden, wurden nochmals 0,5 Teile tert.-Dodecylmercaptan zugegeben. Nach der Reaktionszeit von insgesamt 19 Stunden wurde bei einem Umsatz von 96 % eine Polybutadien-Emulsion mit einem Feststoffgehalt von 39,2 %, bezogen auf die Emulsion, erhalten. Die Polybutadien-Latex hatte eine Glastemperatur von etwa -80°C. Die mittels der Ultrazentrifuge bestimmte Teilchengrößenverteilung (integrale Massenverteilung) ist durch folgende Werte charakterisiert:

$d_{10}$-Wert 0,06 µm
$d_{50}$-Wert 0,08 µm
$d_{90}$-Wert 0,105 µm

255 Teile der Polybutadien-Emulsion wurde bei 65°C mit 74 Teilen Wasser verdünnt. Zur Agglomeration des Latex wurden 30 Teile einer wäßrigen Dispersion eines Ethylacrylat-Copolymeren zudosiert, das 96 Gew.-% Ethylacrylat und 4 Gew.-% Methylacrylamid einpolymerisiert enthielt. Der Feststoffgehalt dieser Dispersion betrug 10 Gew.-%, bezogen auf die Dispersion. Nach der Agglomeration wurde ein Polybutadien-Latex erhalten, in dem etwa 80 Zahlenprozent der Teilchen im nicht agglomerierten Zustand vorlagen. Die mit der Ultrazentrifuge gemessene Teilchengrößenverteilung (integrale Massenverteilung) des agglomerierten Polybutadien-Latex ist durch folgende Werte charakterisiert:

$d_{10}$-Wert 0,079 µm
$d_{50}$-Wert 0,238 µm
$d_{90}$-Wert 0,323 µm

Die so erhaltene Polybutadien-Emulsion wurde auf 70°C aufgeheizt und bei dieser Temperatur mit 0,13 Teilen Kaliumpersulfat (in Form einer 3-prozentigen wäßrigen Lösung), 0,02 Teilen tert.-Do-decylmercaptan und 11 Teile eines Gemisches von Styrol und Acrylnitril versetzt. Das Gewichtsverhältnis von Styrol zu Acrylnitril in diesem Gemisch betrug 7:3. 10 Minuten nach Beginn der Pfropfreaktion wurde innerhalb von 2 3/4 Stunden ein Gemisch aus weiteren 39 Teilen Styrol, 17 Teilen Acrylnitril und 0,1 Teilen tert.-Dodecylmercaptan zudosiert. Dabei stellt sich eine Reaktionstemperatur von 75°C ein. Nach Beendigung der Monomerenzugabe wurde die Reaktion noch 1 Stunde fortgesetzt und das entstandene Pfropfpolymerisat dann mittels einer Calciumchlorid-Lösung bei 95°C gefällt und abgesaugt. Die feuchten Krümel des gepfropften Polybutadiens wurden mittels eines Extruders in die Schmelze eines Styrol-Acrylnitril-Copolymeren eingearbeitet, das 65 Gew.-% Styrol und 35 Gew.-% Acrylnitril einpolymerisiert enthielt. Das gepfropfte Polybutadien wurde dabei mit dem Styrol-Acrylnitril-Copolymeren im Gewichtsverhältnis von 3:7 gemischt.

Komponente D

Ein Ethylen/-n-Butylacrylat/Acrylsäure/Maleinsäureanhydridcopolymer der Zusammensetzung: 60:35:4,8:0,2 Gew.-%.

Herstellung der Formmassen

Die in der Tabelle angegebenen Anteile der jeweiligen Komponenten wurden in einem Zweiwellenextruder der (ZSK 30, (Werner & Pfleiderer)) bei einer Temperatur von 325°C in üblicher Weise konfektioniert. Die Polymerschmelze wurde entgast, als Strang extrudiert, durch ein Wasserbad geleitet, granuliert und getrocknet. Das Granulat wurde anschließend bei 325°C zu Spritzgußplatten verarbeitet.

Die freie Schwindung wurde an diesen Spritzgußplatten (110x110x2 mm) - zentraler Anguß - bestimmt. Der %-Wert ergibt sich aus der prozentualen Differenz der Fläche des Formteils eine Stunde nach dem Spritzgußvorgang zur Fläche der Spritzgußform.

Die Zusammensetzungen der Formmassen und die Ergebnisse der Messungen sind der Tabelle zu entnehmen.

Tabelle

| Beispiel | Komp. A [Gew.-%] | Komp. B [Gew.-%] | Komp. C [Gew.-%] | Komp. D [Gew.-%] | Schwindung [%] |
|---|---|---|---|---|---|
| 1 | A/1 100 | - | - | - | 1.8 |
| 2 | A/1 80 | B/1 20 | - | - | 1.0 |
| 3 | A/1 60 | B/1 5 | C/1 35 | - | 0.6 |
| 4 | A/1 60 | B/2 2 | C/1 38 | - | 0.7 |

Tabelle (fortgesetzt)

| Beispiel | Komp. A [Gew.-%] | Komp. B [Gew.-%] | Komp. C [Gew.-%] | Komp. D [Gew.-%] | Schwindung [%] |
|---|---|---|---|---|---|
| 5 | A/1 60 | B/2 5 | C/1 30 | D 5 | 0.6 |
| 1* | A/1 V 100 | - | - | - | 1.5 |
| 2* | A/1 V 80 | B/1 20 | - | - | 1.3 |
| 3* | A/1 V 50 | B/1 5 | C/1 35 | - | 1.2 |
| 4* | A/1 V 60 | B/2 2 | C/1 38 | - | 1.2 |
| 5* | A/1 V 60 | B/2 5 | C/1 30 | D 5 | 1.3 |

*) zum Vergleich

## Patentansprüche

1. Thermoplastische Formmassen, enthaltend

A) 5 bis 95 Gew.-% eines teilkristallinen, teilaromatischen Copolyamids mit einem Kristallinitätsgrad größer 30 % aufgebaut aus

$a_1$) 30 bis 44 mol-% Einheiten, welche sich von Terephthalsäure ableiten

$a_2$) 6 bis 20 mol-% Einheiten, welche sich von Isophthalsäure ableiten

$a_3$) 43 bis 49,5 mol-% Einheiten, welche sich von Hexamethylendiamin ableiten

$a_4$) 0,5 bis 7 mol-% Einheiten, welche sich von aliphatischen cyclischen Diaminen mit 6 bis 30 C-Atomen ableiten

wobei die Molprozente der Komponenten $a_1$) bis $a_4$) zusammen 100 % ergeben und

B) 5 bis 95 Gew.-% eines Copolymeren aus vinylaromatischen Verbindungen mit $\alpha,\beta$-ungesättigten Dicarbonsäureanhydriden und $\alpha,\beta$-ungesättigten Dicarbonsäureimiden,

C) 0 bis 90 Gew.-% eines SAN-, ABS- oder ASA-Polymeren oder eines Polymeren eines $C_1$- bis $C_{18}$-Alkylesters der (Meth)acrylsäure oder deren Mischungen,

D) 0 bis 20 Gew.-% eines kautschukelastischen Polymerisates

E) 0 bis 50 Gew.-% eines faser- oder teilchenförmigen Füllstoffes

F) 0 bis 30 Gew.-% üblicher Zusatzstoffe und Verarbeitungshilfsmittel,

wobei die Gewichtsprozente der Komponenten A) bis F) zusammen 100 % ergeben.

2. Thermoplastische Formmassen nach Anspruch 1, in denen das Copolyamid A) aufgebaut ist aus

$a_1$) 32 bis 40 mol-%

$a_2$) 10 bis 18 mol-%

$a_3$) 46 bis 48,5 mol-%

$a_4$) 1,5 bis 4 mol-%

**3.** Thermoplastische Formmassen nach einem der Ansprüche 1 oder 2, in denen das Copolyamid A) bis zu 4 Gew.-%, bezogen auf 100 Gew.-% A), an weiteren polyamidbildenden Monomeren $a_5$) enthalten kann.

**4.** Thermoplastische Formmassen nach den Ansprüchen 1 bis 3, in denen das aliphatische cyclische Diamin $a_4$) aus Bis(4-aminocyclohexyl)methan oder
Bis(4-amino-3-methylcyclohexyl)methan oder deren Mischungen besteht.

**5.** Thermoplastische Formmassen nach den Ansprüchen 1 bis 4, in denen das Copolyamid A) einen Triamingehalt von weniger als 0,5 Gew.-% aufweist.

**6.** Thermoplastische Formmassen nach den Ansprüchen 1 bis 5, in denen die Komponente B) aufgebaut ist aus

$b_1$) 10 bis 90 Gew.-% einer vinylaromatischen Verbindung

$b_2$) 1 bis 50 Gew.-% eines $\alpha,\beta$-ungesättigten Dicarbonsäureanhydrids

$b_3$) 9 bis 80 Gew.-% eines $\alpha,\beta$-ungesättigten Dicarbonsäureimids

$b_4$) 0 bis 35 Gew.-% sonstigen radikalisch polymerisierbaren Monomeren.

**7.** Thermoplastische Formmassen nach den Ansprüchen 1 bis 6, in denen das Copolymer B) durch radikalische Polymerisation der Komponenten $b_1$) bis $b_3$) sowie gegebenenfalls $b_4$) erhältlich ist.

**8.** Thermoplastische Formmassen nach den Ansprüchen 1 bis 7, in denen das Copolymer B) durch radikalische Polymerisation der Komponenten $b_1$) und $b_2$) sowie gegebenenfalls $b_4$) und anschließende Umsetzung mit primären Aminen und/oder Ammoniak erhältlich ist.

**9.** Verwendung der thermoplastischen Formmassen gemäß den Ansprüchen 1 bis 8 zur Herstellung von Fasern, Folien und Formkörpern.

**10.** Formkörper, erhältlich aus den thermoplastischen Formmassen gemäß den Ansprüchen 1 bis 8.

## Claims

**1.** A thermoplastic molding material containing

A) from 5 to 95 % by weight of a semicrystalline, partly aromatic copolyamide having a crystallinity of greater than 30 % composed of

$a_1$) from 30 to 44 mol% of units which are derived from terephthalic acid,

$a_2$) from 6 to 20 mol% of units which are derived from isophthalic acid,

$a_3$) from 43 to 49.5 mol% of units which are derived from hexamethylenediamine and

$a_4$) from 0.5 to 7 mol% of units which are derived from aliphatic cyclic diamines of 6 to 30 carbon atoms,

the molar percentages of the components $a_1$) to $a_4$) summing to 100 %,

B) from 5 to 95 % by weight of a copolymer of vinylaromatic compounds with $\alpha,\beta$-unsaturated dicarboxylic anhydrides and $\alpha,\beta$-unsaturated dicarboximides,

C) from 0 to 90 % by weight of an SAN, ABS or ASA polymer or of a polymer of a $C_1$-$C_{18}$-alkyl ester of (meth) acrylic acid or of a mixture thereof,

D) from 0 to 20 % by weight of an elastomeric polymer,

E) from 0 to 50 % by weight of a fibrous or particulate filler and

F) from 0 to 30 % by weight of conventional additives and processing assistants,

the percentages by weight of the components A) to F) summing to 100 %.

**2.** A thermoplastic molding material as claimed in claim 1, in which the copolyamide A) is composed of

from 32 to 40 mol% of $a_1$)

from 10 to 18 mol% of $a_2$)

from 46 to 48.5 mol% of $a_3$) and

from 1.5 to 4 mol% of $a_4$)

**3.** A thermoplastic molding material as claimed in claim 1 or 2, in which the copolyamide A) may contain up to 4 % by weight, based on 100 % by weight of A), of further polyamide-forming monomers $a_5$).

**4.** A thermoplastic molding material as claimed in any of claims 1 to 3, in which the aliphatic cyclic diamine $a_4$) consists of

bis(4-aminocyclohexyl)methane or
bis(4-amino-3-methylcyclohexyl)methane

or of a mixture thereof.

**5.** A thermoplastic molding material as claimed in any of claims 1 to 4, in which the copolyamide A) has a triamine content of less than 0.5 % by weight.

**6.** A thermoplastic molding material as claimed in any of claims 1 to 5, in which the component B) is composed of

$b_1$) from 10 to 90 % by weight of a vinylaromatic compound

$b_2$) from 1 to 50 % by weight of an $\alpha,\beta$-unsaturated dicarboxylic anhydride

$b_3$) from 9 to 80 % by weight of an $\alpha,\beta$-unsaturated dicarboximide, and

$b_4$) from 0 to 35 % by weight of other monomers capable of free radical polymerization.

**7.** A thermoplastic molding material as claimed in any of claims 1 to 6, in which the copolymer B) is obtainable by free radical polymerization of the components $b_1$) to $b_3$) and, if required, $b_4$).

**8.** A thermoplastic molding material as claimed in any of claims 1 to 7, in which the copolymer B) is obtainable by free radical polymerization of the components $b_1$) and $b_2$) and, if required, $b_4$) and subsequent reaction with primary amines or ammonia.

**9.** Use of a thermoplastic molding material as claimed in any of claims 1 to 8 for the production of fibers, films and moldings.

**10.** A molding obtainable from a thermoplastic molding material as claimed in any of claims 1 to 8.

**Revendications**

**1.** Masses à mouler thermoplastiques, qui contiennent

a) 5 à 95% en poids d'un copolyamide partiellement aromatique, partiellement cristallin, avec un degré de cristallinité supérieur à 30%, constitué de

| | |
|---|---|
| $a_1$) | 30 à 44% molaires d'unités qui dérivent de l'acide téréphtalique, |
| $a_2$) | 6 à 20% molaires d'unités qui dérivent de l'acide isophtalique, |
| $a_3$) | 43 à 49,5% molaires d'unités qui dérivent de l'hexaméthylènediamine, |
| $a_4$) | 0,5 à 7% molaires d'unités qui dérivent de diamines cycliques aliphatiques comportant de 6 à 30 atomes de carbone, |

où les pourcentages molaires des composants $a_1$) à $a_4$) totalisent 100% et

| | |
|---|---|
| B) | 5 à 95% en poids d'un copolymère de composés vinylaromatiques avec des anhydrides d'acides dicarboxyliques $\alpha,\beta$-insaturés et imides d'acides dicarboxyliques $\alpha,\beta$-insaturés, |
| C) | 0 à 90% en poids d'un polymère SAN, ABS ou ASA, ou d'un polymère d'un ester alkylique en $C_1$ à $C_{18}$ de l'acide (méth)acrylique, ou de leurs mélanges, |
| D) | 0 à 20% en poids d'un polymère présentant l'élasticité du caout chouc, |
| E) | 0 à 50% en poids d'une charge fibreuse ou particulaire, |
| F) | 0 à 30% en poids d'adjuvants d'ouvrabilité et d'additifs usuels, où les pourcentages pondéraux des composants A) à F) totalisent 100%. |

**2.** Masses à mouler thermoplastiques suivant la revendication 1, dans lesquelles le copolyamide A) est constitué de

$a_1$) 32 à 40% molaires,

$a_2$) 10 à 18% molaires,

$a_3$) 46 à 48,5% molaires,

$a_4$) 1,5 à 4% molaires.

**3.** Masses à mouler suivant l'une quelconque des revendications 1 et 2, dans lesquelles le copolyamide A) peut contenir jusqu'à 4% en poids, par rapport à 100% en poids de A), d'autres monomères polyamidogènes $a_5$).

**4.** Masses à mouler thermoplastiques suivant l'une quelconque des revendications 1 à 3, dans lesquelles la diamine cyclique aliphatique $a_4$) est constituée

de bis(4-aminocyclohexyl)méthane ou
de bis(4-amino-3-méthylcyclohexyl)méthane,

ou de leurs mélanges.

**5.** Masses à mouler thermoplastiques suivant l'une quelconque des revendications 1 à 4, dans lesquelles le copolyamide A) présente une teneur en triamine inférieure à 0,5% en poids.

**6.** Masses à mouler thermoplastiques suivant l'une quelconque des revendications 1 à 5, dans lesquelles le composant B) est constitué de

$b_1$) 10 à 90% en poids d'un composé vinylaromatique,
$b_2$) 1 à 50% en poids d'un anhydride d'un acide dicarboxylique $\alpha,\beta$-insaturé,
$b_3$) 9 à 80% en poids d'un imide d'un acide dicarboxylique $\alpha,\beta$-insaturé,
$b_4$) 0 à 35% en poids d'autres monomères polymérisables par voie radicalaire.

**7.** Masses à mouler thermoplastiques suivant l'une quelconque des revendications 1 à 6, dans lesquelles le copolymère B) peut être obtenu par la polymérisation radicalaire des composants $b_1$) à $b_3$) ainsi qu'éventuellement $b_4$).

**8.** Masses à mouler thermoplastiques suivant les revendications 1 à 7, dans lesquelles le copolymère B) peut être obtenu par la polymérisation radicalaire des composants $b_1$) et $b_2$) ainsi qu'éventuellement $b_4$) et réaction subséquente avec des amines primaires et/ou de l'ammoniac.

**9.** Utilisation des masses thermoplastiques suivant l'une quelconque des revendications 1 à 8, en vue de la fabrication

de fibres, de feuilles, et d'articles moulés.

**10.** Articles moulés que l'on peut obtenir à partir des masses à mouler thermoplastiques suivant l'une quelconque des revendications 1 à 8.